(19) Europäisches Patentamt
European Patent Office
Office européen des brevets

(11) EP 3 079 191 B1

(12) EUROPEAN PATENT SPECIFICATION

(45) Date of publication and mention of the grant of the patent:
**24.07.2019 Bulletin 2019/30**

(21) Application number: **14867342.9**

(22) Date of filing: **19.11.2014**

(51) Int Cl.:
***H01M 8/02*** *(2016.01)* ***H01B 1/06*** *(2006.01)*
***H01M 2/16*** *(2006.01)* ***H01M 8/10*** *(2016.01)*
***H01M 2/14*** *(2006.01)* ***H01M 8/0289*** *(2016.01)*
***H01M 8/1044*** *(2016.01)* ***H01M 8/106*** *(2016.01)*
***H01M 8/1065*** *(2016.01)* ***H01M 8/1062*** *(2016.01)*
***H01M 8/1081*** *(2016.01)* ***H01M 8/1086*** *(2016.01)*

(86) International application number:
**PCT/JP2014/080628**

(87) International publication number:
**WO 2015/083546 (11.06.2015 Gazette 2015/23)**

# (54) COMPOSITE FILM FOR ELECTROCHEMICAL ELEMENT

VERBUNDFOLIE FÜR ELEKTROCHEMISCHES ELEMENT

FILM COMPOSITE POUR ÉLÉMENT ÉLECTROCHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2013 JP 2013250260**

(43) Date of publication of application:
**12.10.2016 Bulletin 2016/41**

(73) Proprietor: **Valqua, Ltd.**
**Tokyo 141-6024 (JP)**

(72) Inventors:
- **WATANABE Naoki**
  **Tokyo 194-0215 (JP)**
- **SETOGUCHI Yoshihiro**
  **Tokyo 194-0215 (JP)**
- **MOTOORI Manabu**
  **Tokyo 194-0215 (JP)**

(74) Representative: **Glawe, Delfs, Moll**
**Partnerschaft mbB von**
**Patent- und Rechtsanwälten**
**Postfach 13 03 91**
**20103 Hamburg (DE)**

(56) References cited:
**WO-A1-2013/084760 WO-A2-2012/122485**
**JP-A- 2002 317 058 JP-A- 2003 297 394**
**JP-A- 2009 070 675 JP-A- 2009 245 639**
**JP-A- 2012 515 850 JP-A- 2013 062 240**
**US-A1- 2013 101 918**

- **SHENG SHUI ZHANG: "A review on the separators of liquid electrolyte Li-ion batteries", JOURNAL OF POWER SOURCES, vol. 164, no. 1, 1 January 2007 (2007-01-01), pages 351-364, XP55185408, ISSN: 0378-7753, DOI: 10.1016/j.jpowsour.2006.10.065**
- **KAZUAKI TSUJI ET AL.: 'PTFE Nanofiber Fushokufu' VALQUA TECHNOLOGY NEWS 2012, pages 13 - 15, XP008183711**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a composite membrane for an electrochemical device which is highly stable as a membrane and which has a high ion exchange capacity.

### Background Art

Fuel cells attract attention as clean energy sources. In particular, it is expected that polymer electrolyte fuel cells can be reduced in size and weight and can be used in a wide range of fields, for example for household uses, mobile uses and automobile uses. A polymer electrolyte fuel cell has a structure in which single cells and separators are piled, and in each cell, a polymer electrolyte membrane is interposed between the electrodes, i.e., a fuel electrode and an air electrode.

Regarding a solid polymer electrolyte membrane used for a polymer electrolyte fuel cell, it is necessary to reduce the resistance of the membrane itself, and thus the membrane is desirably as thin as possible. When the membrane is too thin, however, problems, such as pinholes which are generated during the membrane production, breakage of the membrane during the electrode formation and a short circuit of the electrodes, arise.

In addition, a solid polymer electrolyte membrane is often used under a wet condition, and the electrolyte membrane swells. Under a dry condition, however, the solid polymer electrolyte membrane dries and shrinks. When such swelling and shrinkage are repeated, the electrolyte membrane is apt to deform. The deformation and the like cause problems with the pressure resistance during the operation at different pressures and with the reliability of cross leakage or the like.

Moreover, development of a secondary cell which can be used repeatedly for a long time with a high output has been continued. For a secondary cell, a separator (a barrier membrane) is used as a member for separating the cathode solution and the anode solution of various types and conducting ions between the cathode and the anode. Also with respect to the separator, reduction in size of the secondary cell, elongation of the lifetime and improvement of the performance are considered to be issues to be solved. Therefore, a membrane member which is thin and which has enough strength and low membrane resistance has been required.

In order to solve the problems, various solid polymer electrolyte membranes and separators have been studied. For example, in the solid polymer electrolyte membrane disclosed in PTL 1, an expanded membrane (expanded polytetrafluoroethylene) is used as a reinforcement membrane, and the stability of the solid polymer electrolyte membrane is thus achieved. Also, in the cell separator disclosed in PTL 2, polyethylene having a low molecular weight is fixed on the fiber surfaces of a porous polytetrafluoroethylene film (expanded polytetrafluoroethylene) having fibrils and nodes, and PTL 2 aims to thus provide a separator having excellent ion conductivity and low electrical resistance. Moreover, the polymer electrolyte membrane disclosed in PTL 3 has enhanced mechanical strength, high dimensional stability and low electrical resistance because the inner layer is formed of polymer fibers having diameters of from 20 to 400 g/9000m (denier) and an outer layer of a polymer having an ion exchange group is formed around the inner layer.

### Citation List

#### Patent Literature

PTL 1: JP-A-2010-155233
PTL 2: JP-A-1-149360
PTL 3: JP-A-2003-132910

A composite film according to the preamble of claim 1 is disclosed in US 2013/101918 A1. Further prior art is disclosed in SHENG SHUI ZHANG: "A review on the separators of liquid electrolyte Li-ion batteries", JOURNAL OF POWER SOURCES, vol. 164, no. 1, 1 January 2007, pages 351-364 and in WO 2012/122485 A2.

### Summary of Invention

#### Technical Problem

However, internal breakage is apt to occur in the solid polymer electrolyte membrane and the separator disclosed

in PTLs 1 and 2, in which an expanded membrane is used as the reinforcement membrane, because of the internal shrinkage of the membranes due to the anisotropy in the machine direction (referred to as the TD direction below) and the transverse direction (referred to as the MD direction below), which is peculiar to expanded membranes, and because of the thermal shrinkage due to the heat history during the expansion step. Also, because an expanded membrane is composed of nodes (knots) and fibrils (fibrous parts), the porous structure is less uniform, and the ion exchange capacity is difficult to increase. Thick polymer fibers having diameters of from 20 to 400 g/9000m (denier) are used for the polymer electrolyte membrane disclosed in PTL 3. Thus, the polymer electrolyte membrane has problems such as increased membrane resistance due to the inhibition of the proton conduction in the membrane and an increase in the thickness of the electrolyte membrane as a composite membrane.

In view of the above problems, the invention provides a composite membrane for an electrochemical device.

Solution to Problem

The composite membrane for an electrochemical device of the invention, which has been made to solve the problems, is characterized by the features of claim 1.

Due to this structure, the composite membrane for an electrochemical device is highly stable as a membrane and has a high ion exchange capacity.

Also, the composite membrane for an electrochemical device of the invention is characterized in that the fluororesin fiber is a polytetrafluoroethylene fiber.

Due to this structure, the composite membrane is highly heat resistant and highly durable in chemicals such as electrolytes.

Moreover, the composite membrane for an electrochemical device of the invention is characterized in that the polytetrafluoroethylene fiber is a polytetrafluoroethylene fiber generated from a solution containing polytetrafluoroethylene by an electrospinning method.

Due to this structure, the composite membrane has the following characteristics. The composite membrane has higher heat resistance and stability. Also, because the porosity is higher and because the fiber diameters and the pore diameters are highly uniform, the pores can be filled with a large amount of the ion exchange material and the ion exchange capacity is high. Even when the membrane thickness is reduced, the composite membrane has enough strength and can be reduced in membrane resistance. Also, the anisotropy between the MD direction and the TD direction is not generated.

Furthermore, the composite membrane for an electrochemical device of the invention is characterized in that the ion exchange material is a fluorine-containing ion exchange resin.

Due to this structure, a highly durable composite membrane can be obtained, and a proton-permeable channel is generated easily.

In addition, the composite membrane for an electrochemical device of the invention is characterized by being used as an electrolyte membrane for a fuel cell.

Due to this structure, an electrolyte membrane for a fuel cell which has low membrane resistance and excellent membrane stability and which does not easily deform or break can be provided.

Also, the composite membrane for an electrochemical device of the invention is characterized by being used as a separator for a secondary cell.

Due to this structure, a separator for a secondary cell which has low membrane resistance and excellent membrane stability and which does not easily deform or break can be provided.

The method for producing a composite membrane for an electrochemical device of the invention is characterized by the features of claim 6.

Due to this structure, a composite membrane for an electrochemical device which has low membrane resistance and which is not anisotropic can be produced.

Also, the method for producing a composite membrane for an electrochemical device of the invention is characterized by including a spinning solution preparation step of preparing a spinning solution by dispersing or dissolving a fiberizing polymer and polytetrafluoroethylene in a solvent, an electrospinning step of forming a nonwoven fluororesin fabric precursor by generating and accumulating pieces of a fluororesin fiber by an electrospinning method using the spinning solution, a firing step of removing the fiberizing polymer and the solvent by heating and firing the nonwoven fluororesin fabric precursor and forming a nonwoven fluorine fabric consisting of polytetrafluoroethylene and a composite formation step of forming a composite of the nonwoven fluororesin fabric and an ion exchange material.

Due to this structure, a composite membrane for an electrochemical device which has excellent heat resistance, excellent long-term stability, excellent chemical durability and low membrane resistance as well as highly uniform strength, highly uniform durability and highly uniform membrane resistance can be produced.

The secondary cell of the invention is characterized by including a composite membrane for an electrochemical device. Due to this structure, the secondary cell can have improved performance, an elongated lifetime, a reduced size

and a reduced weight.

The fuel cell of the invention is characterized by including a composite membrane for an electrochemical device.

Due to this structure, the fuel cell can have improved performance, an elongated lifetime, a reduced size and a reduced weight.

Advantageous Effects of Invention

The composite membrane for an electrochemical device of the invention is highly stable as a membrane and has a high ion exchange capacity.

Brief Description of Drawings

Fig. 1 is a schematic sectional view of the composite membrane for an electrochemical device of the embodiment

Description of Best Embodiments

The composite membrane for an electrochemical device of the embodiment is explained below based on Fig. 1. In this regard, Fig. 1 is a schematic sectional view of the composite membrane for an electrochemical device of the embodiment.

The composite membrane for an electrochemical device 10 of the embodiment has a nonwoven fluororesin fabric 11 including a fluororesin fiber having an average fiber diameter of from 300 to 5000 nm and an ion exchange material 12. From the viewpoints of the strength, the stability and the membrane resistance of the composite membrane for an electrochemical device 10 to be obtained, though depending also on the kind of the fluororesin, the average fiber diameter of the nonwoven fluororesin fabric 11 is preferably from 400 to 2000 nm, and further preferably from 600 to 1200 nm. When the average fiber diameter is more than 5000 nm, the fiber pieces having large fiber diameters may inhibit the ion exchange (permeation) property of the composite membrane for an electrochemical device. Here, the average fiber diameter is determined as follows. An area which is observed with a scanning electron microscope (SEM) is specified at random in the nonwoven fluororesin fabric 11 to be measured. The area is observed with the SEM (at 10000× magnification), and for example, 10 pieces of the fluororesin fiber are randomly selected. The diameters of the pieces of the fluororesin fiber are measured using a measurement device, and the average fiber diameter is then calculated.

The cross-sectional shape of the fluororesin fiber is not particularly limited, and a fiber having a circular, elliptical, flat or polygonal cross-section or the like can be used. However, from the viewpoints of the uniformity of the strength and the characteristics of the composite membrane for an electrochemical device, the cross-sectional shape is preferably a circle. Moreover, as illustrated in the schematic sectional view of Fig. 1, the composite membrane for an electrochemical device 10 is a nanofiber-reinforced solid polymer electrolyte membrane in which at least a part of the voids formed in the nonwoven fluororesin fabric 11 are filled with the ion exchange material 12.

In this regard, the fluororesin which constitutes the fluororesin fibers is polyvinylidene fluoride, polyhexafluoropropylene, polyperfluoroalkyl vinyl ether, polychlorotrifluoroethylene, polytetrafluoroethylene or the like. Copolymers of the fluororesins or a polymer blend containing two or more fluororesins may also be used. Of the fluororesins, a fluororesin of polytetrafluoroethylene is preferable in view of the heat resistance, the long-term stability and the chemical durability.

The nonwoven fluororesin fabric 11 has plural pores and functions as a reinforcement material in the composite membrane for an electrochemical device 10.

The nonwoven fluororesin fabric 11 can be formed by a known method for producing fibers. However, the nonwoven fluororesin fabric 11 is preferably formed by an electrospinning method in particular, because a fluororesin fiber having a circular cross-section and having a small average fiber diameter can be produced by a dry process and deposited (without applying a heavy load such as water pressure) and also because a nonwoven fluororesin fabric 11 having a high porosity can be produced. Here, when the fluororesin is polytetrafluoroethylene for example, the electrospinning method is the spinning method disclosed in JP-A-51-60773 and JP-A-2012-515850. Specifically, a fiberizing polymer and polytetrafluoroethylene are dispersed or dissolved in a solvent, and a spinning solution is thus prepared. The spinning solution is fed into a charged needlelike container. Here, a target is placed at a certain distance from the needlelike container and grounded. The spinning solution in the needlelike container is drawn towards the target by electrostatic force, and fluororesin fibers are thus generated. By subjecting the nonwoven fluororesin fabric precursor formed by accumulating pieces of the fluororesin fiber to heating and firing treatment, the fiberizing polymer and the solvent are removed. In this manner, the nonwoven fluororesin fabric 11 consisting of polytetrafluoroethylene is formed.

Though depending also on the diameters of the fluororesin fibers, the thickness of the nonwoven fluororesin fabric 11 is preferably from 5 μm to 500 μm, and further preferably from 10 μm to 200 μm. When the thickness of the

nonwoven fluororesin fabric 11 is within the range, the needs for reduction in size of an electrochemical device and reduction in membrane thickness can be met, and a structure in which many fiber pieces are distributed and deposited evenly is obtained. Thus, a composite membrane in which the strength, the membrane resistance and the durability are highly uniform can be obtained.

From the viewpoints of the membrane resistance and the strength of the composite membrane for an electrochemical device to be obtained, the porosity of the nonwoven fluororesin fabric 11 is preferably from 40 to 98%, and further preferably from 65 to 95%.

The ion exchange material 12 is a material having an ion exchange group. Known organic materials, inorganic materials and organic-inorganic composite materials can be used, and two or more ion exchange materials may also be used. Of these ion exchange materials, the ion exchange material is preferably an ion exchange material of an organic material from the viewpoint of the flexibility of the composite membrane for an electrochemical device and is further preferably a perfluorocarbon sulfonic acid resin from the viewpoint of the durability of the composite membrane for an electrochemical device. Commercial perfluorocarbon sulfonic acid resins which can be used are, for example, Nafion (registered trademark, manufactured by E. I. du Pont de Nemours and Company, the indication of registered trademark and the manufacturer are omitted below), which has the structure in the following formula, and Aquivion (registered trademark, manufactured by Solvay Solexis, the indication of registered trademark and the manufacturer are omitted below).

[Chem. 1]

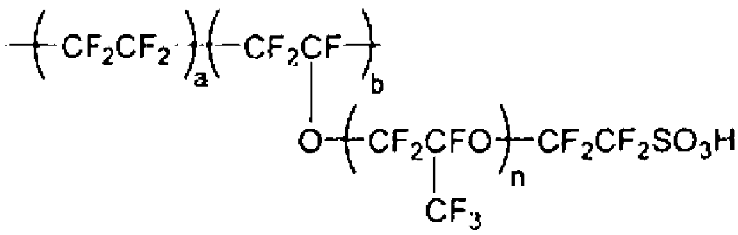

In the formula, a:b is from 1:1 to 9:1, and n is 0, 1 or 2.

The ion exchange material 12 may be used alone to form a composite with the nonwoven fluororesin fabric 11, and the ion exchange material 12 may be dispersed or dissolved in a solvent and then used for forming a composite with the nonwoven fluororesin fabric 11. Though a known method can be used as the composite formation method, the pores of the nonwoven fluororesin fabric 11 are impregnated with the ion exchange material 12, for example by a method in which the nonwoven fluororesin fabric 11 is dipped in and impregnated with the ion exchange material 12 alone or in a solution obtained by dispersing or dissolving the ion exchange material 12, or by a method in which the ion exchange material 12 alone or a solution obtained by dispersing or dissolving the ion exchange material 12 is applied and adhered on the nonwoven fluororesin fabric 11. Heat drying treatment may be conducted, when necessary, during the composite formation step, and application of ionizing radiation such as an electron beam or chemical treatment using a cross-linking agent may also be conducted.

Next, the method for producing the composite membrane for an electrochemical device 10 is explained below.

First, the nonwoven fluororesin fabric 11 is formed for example by the electrospinning method described above. That is, a fluororesin and, when necessary, a fiberizing polymer and an additive such as a surfactant are dispersed or dissolved in a solvent, and a spinning solution is thus prepared. Next, the spinning solution is fed into a charged needlelike container. Here, a target is placed at a certain distance from the needlelike container and grounded. The spinning solution in the needlelike container is drawn towards the target by electrostatic force, and a fluororesin fiber having a desired average fiber diameter is thus generated (the average fiber diameter of the embodiment is from 300 to 5000 nm). The nonwoven fluororesin fabric precursor formed by accumulating pieces of the fluororesin fiber thus generated is subjected to heating and firing treatment at a temperature of from 30 to 400°C, when necessary, and the nonwoven fluororesin fabric 11 is thus formed. In this regard, the nonwoven fluororesin fabric 11 can be produced in such a manner that the nonwoven fluororesin fabric 11 does not have anisotropy between the MD direction and the TD direction, which is observed in expanded membranes.

Next, a composite of the nonwoven fluororesin fabric 11 and the ion exchange material 12 is formed. When the composite is formed by impregnation for example, Nafion or Aquivion, which is the ion exchange material 12, is first dissolved in a solvent to prepare an ion exchange material solution. Then, the nonwoven fluororesin fabric 11 is dipped in the prepared ion exchange material solution and left still for from one minute to 24 hours.

In the composite formation step described above, the nonwoven fluororesin fabric 11 is liquid repellent. Thus, in some cases, the nonwoven fluororesin fabric 11 is not easily impregnated with the ion exchange material 12 when

the nonwoven fluororesin fabric 11 is dipped in the ion exchange material solution. In such a case, it is preferable to once impregnate the nonwoven fluororesin fabric 11 with an organic solvent such as 1-propanol, methyl alcohol, acetone or diethyl ether before the step of forming the composite with the ion exchange material solution so that the ion exchange material solution penetrates evenly into the pores of the fluororesin.

The nonwoven fluororesin fabric 11 which has been left still for a certain period is taken out of the ion exchange material solution and dried by evaporating and removing the solvent in an environment at from 30 to 250°C for from one minute to 24 hours. Thus, the composite membrane for an electrochemical device 10 is produced. The drying step may be conducted at a constant temperature, or the composite membrane for an electrochemical device 10 may be dried stepwise in environments at different temperatures. Also, the composite membrane for an electrochemical device 10 may be dried in an environment at reduced pressure or at increased pressure, when necessary.

<Example 1>

In Example 1 of the embodiment, a nonwoven fabric made of a polytetrafluoroethylene fiber (referred to as a PTFE fiber below) having an average fiber diameter of 900 nm which were generated by an electrospinning method and subjected to heating and firing treatment was used as the nonwoven fluororesin fabric, and a 20 mass% Nafion solution was used as the solution of the ion exchange material 12. The nonwoven fabric of the PTFE fiber had a porosity of 85%, an average pore diameter of 1.8 μm and a thickness of 60 μm. Here, the porosity was calculated by the following equation.

$$\text{Porosity (\%)} = [1-\{(\text{weight of nonwoven fluororesin fabric})/(\text{volume of nonwoven fluororesin fabric} \times \text{true density of fluororesin})\}] \times 100$$

In this regard, the volume of the nonwoven fluororesin fabric in the above equation is the value calculated from the measured width, length and thickness of the nonwoven fluororesin fabric. Also, the true density of the fluororesin (PTEE) here was 2.1 g/cm$^3$.

The thermal shrinkage rates of the nonwoven fluororesin fabric obtained were calculated from the sizes before and after three-hour heat treatment in an electric furnace kept at 220°C. The sizes before the heat treatment were regarded as 100%. The results are shown in Table 1.

Next, as the composite formation step, the nonwoven fluororesin fabric obtained was first dipped in 1-propanol and taken out. Then, the nonwoven fluororesin fabric was dipped in and impregnated with the Nafion solution and left still for three hours. The pores of the nonwoven fluororesin fabric were thus filled with Nafion. Then, the nonwoven fluororesin fabric was taken out of the Nafion solution, left still in a drying furnace kept at 60°C for 30 minutes and then left still in a drying furnace kept at 120°C for 10 minutes to remove the solvent. The composite membrane for an electrochemical device of Example 1 was thus produced.

The ion exchange capacity and the dimensional changes of the composite membrane for an electrochemical device obtained in Example 1 were measured. The results of the measurement are shown in Table 1.

The ion exchange capacity (IEC) was measured by neutralization titration. First, the dry composite membrane for an electrochemical device was impregnated with an aqueous sodium chloride (NaCl) solution and left still for 48 hours. Then, through neutralization titration with aqueous 0.01 M sodium hydroxide (NaOH) solution, the amount of the sulfone groups in the composite membrane for an electrochemical device was determined. From the amount of the sulfone groups and the weight of the dry composite membrane for an electrochemical device, the concentration of the sulfone groups and the ion exchange capacity (IEC) were calculated.

The dimensional changes were calculated by the following method. The composite membrane for an electrochemical device was dipped in water kept at 90°C for three hours and then taken out, and the remaining water was wiped off the surface of the composite membrane for an electrochemical device. The sizes were measured immediately after swelling. Also, the moisture in the composite membrane for an electrochemical device was removed by drying the composite membrane at 110°C for three hours, and the sizes were measured after drying. The dimensional changes were calculated based on the sizes before dipping in water regarded as 100%.

The changes of the shape of the composite membrane for an electrochemical device were evaluated visually immediately after swelling and after drying based on the following criteria.

◎: Hardly any wrinkles or curls were observed.
○: Wrinkles and curls were observed in some parts but the composite membrane as a whole maintained the flat shape.
Δ: Many wrinkles and curls were generated, and some parts of the composite membrane could not maintain the flat shape.
×: The composite membrane as a whole could not maintain the flat shape due to wrinkles and curls.

[Table 1]

| | | | | | Example 1 | Example 2 | Comparative Example 1 | Comparative Example 2 | Comparative Example 3 | Comparative Example 4 |
|---|---|---|---|---|---|---|---|---|---|---|
| Nonwoven fluororesin fabric | Average fiber diameter | | | nm | 900 | 900 | - | - | - | - |
| | Porosity | | | % | 85 | 85 | 85 | 66 | 56 | - |
| | Average diameter | | | μm | 1.8 | 1.8 | 1.0 | 0.45 | 0.1 | - |
| | Thickness | | | μm | 60 | 30 | 30 | 30 | 30 | 51 |
| | Thermal shrinkage | | MD | μm | 99.7 | 99.9 | 93.8 | 99.5 | 99.3 | 51 |
| | | | TD | % | 98.0 | 99.2 | 90.8 | 97.8 | 97.4 | - |
| | | | Thickness | % | 103 | 100 | 123 | 102 | 102 | - |
| Composite membrane for electrochemical device | Ion exchange capacity | | | meq/g | 0.95 | 0.85 | 0.77 | 0.66 | 0.60 | 0.95 |
| | Dimensional change | Immediately after swelling (WET) | MD | % | 106 | 104 | 112 | 113 | 115 | 115 |
| | | | TD | % | 106 | 104 | 106 | 107 | 110 | 115 |
| | | | Thickness | % | 106 | 105 | 110 | 110 | 110 | 115 |
| | | | Shape | Qualitative eval uation | ◎ | ○ | × | Δ | Δ | ◎ |
| | | After drying (DRY) | MD | % | 98 | 98 | 95 | 98 | 99 | 92 |
| | | | TD | % | 99 | 99 | 94 | 99 | 100 | 93 |
| | | | Thickness | % | 100 | 99 | 95 | 100 | 100 | 91 |
| | | | Shape | Qualitative evaluation | ○ | ○ | × | Δ | Δ | ◎ |

<Example 2>

The composite membrane for an electrochemical device of Example 2 was produced by the same procedures as those in Example 1 except that the nonwoven fluororesin fabric used had a porosity of 85%, an average pore diameter of 1.8 μm and a thickness of 30 μm and was formed of a PTFE fiber having an average fiber diameter of 900 nm which were generated by an electrospinning method and subjected to heating and firing treatment. The thermal shrinkage rates of the nonwoven fluororesin fabric used in Example 2 and the ion exchange capacity and the dimensional changes of the composite membrane for an electrochemical device produced in Example 2 were measured by the same methods as those in Example 1. The results of the measurement are shown in Table 1.

<Comparative Example 1>

In Comparative Example 1, a composite membrane for an electrochemical device was produced by the same procedures as those in Example 1 except that an expanded polytetrafluoroethylene (referred to as e-PTFE below, porosity of 85%, average pore diameter of 1.0 μm and thickness of 30 μm) was used instead of the nonwoven fluororesin fabric. The thermal shrinkage rates of the e-PTFE used in Comparative Example 1 and the ion exchange capacity and the dimensional changes of the composite membrane for an electrochemical device produced in Comparative Example 1 were measured by the same methods as those in Example 1. The results of the measurement are shown in Table 1. In this regard, because e-PTFE is composed of non-fibrous nodes (knots) and fibrils (fibrous parts), an adequate average fiber diameter could not be determined by the method for measuring the fiber diameters by SEM observation. Thus, the average fiber diameter is not shown in Table 1.

<Comparative Example 2>

In Comparative Example 2, a composite membrane for an electrochemical device was produced by the same procedures as those in Example 1 except that an e-PTFE (porosity of 66%, average pore diameter of 0.45 μm and thickness of 30 μm) was used instead of the nonwoven fluororesin fabric. The thermal shrinkage rates of the e-PTFE used in Comparative Example 2 and the ion exchange capacity and the dimensional changes of the composite membrane for an electrochemical device produced in Comparative Example 2 were measured by the same methods as those in Example 1. The results of the measurement are shown in Table 1.

<Comparative Example 3>

In Comparative Example 3, a composite membrane for an electrochemical device was produced by the same procedures as those in Example 1 except that an e-PTFE (porosity of 56%, average pore diameter of 0.10 μm and thickness of 30 μm) was used instead of the nonwoven fluororesin fabric. The thermal shrinkage rates of the e-PTFE used in Comparative Example 3 and the ion exchange capacity and the dimensional changes of the composite membrane for an electrochemical device produced in Comparative Example 3 were measured by the same methods as those in Example 1. The results of the measurement are shown in Table 1.

<Comparative Example 4>

In Comparative Example 4, a commercial perfluorocarbon sulfonic acid membrane (Nafion NRE212, manufactured by E. I. du Pont de Nemours and Company) was used as the composite membrane for an electrochemical device. The ion exchange capacity and the dimensional changes of the composite membrane for an electrochemical device of Comparative Example 4 were measured by the same methods as those in Example 1. The results of the measurement are shown in Table 1.

Because the nonwoven fluororesin fabrics 11 of the invention had a high porosity, it is thought that the ion exchange material 12 could easily penetrate into the insides of the nonwoven fluororesin fabrics 11 and that the pores could be filled with large amounts of the ion exchange material 12. Thus, the composite membranes for an electrochemical device 10 of the invention had a high ion exchange capacity.

Because nonwoven fabrics of fibers having fiber diameters of from 300 to 5000 nm were used for the composite membranes for an electrochemical device 10 of the invention, the membrane resistance of the composite membranes for an electrochemical device could be reduced and the thicknesses could also be reduced.

Because the nonwoven fluororesin fabrics 11 of the invention were formed by an electrospinning method, the thermal shrinkage rates were small, and the dimensional changes due to swelling and the generation of wrinkles and curls could be prevented, so that the composite membranes for an electrochemical device 10 were highly stable. Moreover, the anisotropy between the membrane directions was small, and thus the composite membranes for an electrochemical device 10 do not break easily. Furthermore, because the fiber diameters and the pore diameters of the nonwoven fluororesin fabrics used were more uniform compared to those of e-PTFE, it is thought that the pores could be filled with large amounts of the ion exchange material 12. Thus, the ion exchange capacities were high.

The composite membrane for an electrochemical device 10 of the embodiment can be used not only as an electrolyte membrane for a fuel cell but also as a separator of a secondary cell and as an ion exchange membrane for an electrochemical device.

Reference Signs List

10: Composite membrane for electrochemical device
11: Nonwoven fluororesin fabric
12: Ion exchange material

## Claims

1. A composite membrane (10) for an electrochemical device comprising
a nonwoven fluororesin fabric (11) made of a fluororesin fiber having an average fiber diameter of from 300 to 5000 nm, determined by SEM as described in the description, and
an ion exchange material (12) which is a perfluorocarbon sulfonic acid resin,
**characterized in that** the fluororesin fiber is a polytetrafluoroethylene fiber.

2. The composite membrane (10) for an electrochemical device according to claim 1 **characterized in that** a thickness of the nonwoven fluororesin fabric (11) is 5 to 200 μm.

3. The composite membrane (10) for an electrochemical device according to any one of claims 1 to 2 **characterized in that** the composite membrane (10) for an electrochemical device is an electrolyte membrane for a fuel cell.

4. The composite membrane (10) for an electrochemical device according to any one of claims 1 to 2 **characterized in that** the composite membrane (10) for an electrochemical device is a separator for a secondary cell.

5. A method for producing a composite membrane (10) for an electrochemical device according to claim 1 **characterized by** comprising
a spinning solution preparation step of preparing a spinning solution by dispersing or dissolving a fiberizing polymer and polytetrafluoroethylene in a solvent,
an electrospinning step of forming a nonwoven fluororesin fabric (11) precursor by generating and accumulating pieces of a fluororesin fiber by an electrospinning method using the spinning solution,
a firing step of removing the fiberizing polymer and the solvent by heating and firing the nonwoven fluororesin fabric (11) precursor and forming a nonwoven fluorine fabric consisting of polytetrafluoroethylene, and
a composite formation step of forming a composite of the nonwoven fluororesin fabric (11) and an ion exchange material (12) which is a perfluorocarbon sulfonic acid resin.

6. A secondary cell **characterized by** comprising the composite membrane (10) for an electrochemical device according to any one of claims 1 to 2 and claim 4.

7. A fuel cell **characterized by** comprising the composite membrane (10) for an electrochemical device according to any one of claims 1 to 3.

## Patentansprüche

1. Kompositmembran (10) für eine elektrochemische Vorrichtung, die folgendes umfasst
ein Fluorharzvlies (11), hergestellt aus einer Fluorharzfaser, die einen mittleren Faserdurchmesser von 300 bis 5000 nm, wie in der Beschreibung beschrieben durch REM bestimmt, aufweist, und
ein Ionenaustauschmaterial (12), das ein Perfluorcarbonsulfonsäureharz ist,
**dadurch gekennzeichnet, dass** die Fluorharzfaser eine Polytetrafluorethylenfaser ist.

2. Kompositmembran (10) für eine elektrochemische Vorrichtung gemäß Anspruch 1, **dadurch gekennzeichnet, dass** eine Dicke des Fluorharzvlieses (11) 5 bis 200 μm ist.

3. Kompositmembran (10) für eine elektrochemische Vorrichtung gemäß einem der Ansprüche 1 bis 2, **dadurch gekennzeichnet, dass** die Kompositmembran (10) für eine elektrochemische Vorrichtung eine Elektrolytmembran für eine Brennstoffzelle ist.

4. Kompositmembran (10) für eine elektrochemische Vorrichtung gemäß einem der Ansprüche 1 bis 2, **dadurch gekennzeichnet, dass** die Kompositmembran (10) für eine elektrochemische Vorrichtung ein Separator für eine Sekundärzelle ist.

5. Verfahren zum Herstellen einer Kompositmembran (10) für eine elektrochemische Vorrichtung gemäß Anspruch 1, **dadurch gekennzeichnet, dass** sie Folgendes umfasst
einen Spinnlösung-Herstellungsschritt des Herstellens einer Spinnlösung durch Dispergieren oder Lösen eines faserbildenden Polymers und Polytetrafluorethylen in einem Lösungsmittel,
einen Elektrospinnschritt des Bildens eines Vorläufers eines Fluorharzvlieses (11) durch Erzeugen und Sammeln von Teilen einer Fluorharzfaser durch ein Elektrospinnverfahren unter Verwendung der Spinnlösung,
einen Brennschritt des Entfernens des faserbildenden Polymers und des Lösungsmittels durch Erwärmen und Brennen des Vorläufers des Fluorharzvlieses (11) und Bilden eines Fluorharzvlieses, das aus Polytetrafluorethylen besteht, und
einen Kompositbildungsschritt des Bildens eines Komposits des Fluorharzvlieses (11) und eines Ionenaustauschmaterials (12), das ein Perfluorcarbonsulfonsäureharz ist.

6. Sekundärzelle, **gekennzeichnet durch** Umfassen der Kompositmembran (10) für eine elektrochemische Vorrichtung gemäß einem der Ansprüche 1 bis 2 und Anspruch 4.

7. Brennstoffzelle, **gekennzeichnet durch** Umfassen der Kompositmembran (10) für eine elektrochemische Vorrichtung gemäß einem der Ansprüche 1 bis 3.

## Revendications

1. Membrane composite (10) pour un dispositif électrochimique comprenant
un non-tissé de résine fluorée (11) constitué d'une fibre de résine fluorée ayant un diamètre moyen de fibre, déterminé par MEB comme décrit dans la description, de 300 à 5000 nm et
une matière échangeuse d'ions (12) qui est une résine d'acide sulfonique perfluorocarbonée,
**caractérisée en ce que** la fibre de résine fluorée est une fibre de polytétrafluoroéthylène.

2. Membrane composite (10) pour un dispositif électrochimique selon la revendication 1 **caractérisée en ce qu'**une épaisseur du non-tissé de résine fluorée (11) est de 5 à 200 μm.

3. Membrane composite (10) pour un dispositif électrochimique selon l'une quelconque des revendications 1 à 2 **caractérisée en ce que** la membrane composite (10) pour un dispositif électrochimique est une membrane électrolytique pour une pile à combustible.

4. Membrane composite (10) pour un dispositif électrochimique selon l'une quelconque des revendications 1 à 2 **caractérisée en ce que** la membrane composite (10) pour un dispositif électrochimique est un séparateur pour une pile secondaire.

5. Procédé pour la production d'une membrane composite (10) pour un dispositif électrochimique selon la revendication 1 **caractérisé en ce qu'**il comprend
une étape de préparation de solution de filage consistant à préparer une solution de filage par dispersion ou dissolution d'un polymère de formation de fibres et de polytétrafluoroéthylène dans un solvant,
une étape d'électrofilage consistant à former un précurseur de non-tissé de résine fluorée (11) par la production et l'accumulation de pièces d'une fibre de résine fluorée par un procédé d'électrofilage utilisant la solution de filage,
une étape de cuisson consistant à éliminer le polymère de formation de fibres et le solvant par chauffage et cuisson du précurseur de non-tissé de résine fluorée (11) et former un non-tissé fluoré constitué de polytétrafluoroéthylène et
une étape de formation de composite consistant à former un composite du non-tissé de résine fluorée (11) et d'une

matière échangeuse d'ions (12) qui est une résine d'acide sulfonique perfluorocarbonée.

6. Pile secondaire **caractérisée en ce qu'**elle comprend la membrane composite (10) pour un dispositif électrochimique selon l'une quelconque des revendications 1 à 2 et la revendication 4.

7. Pile à combustible **caractérisée en ce qu'**elle comprend la membrane composite (10) pour un dispositif électrochimique selon l'une quelconque des revendications 1 à 3.

[Fig.1]

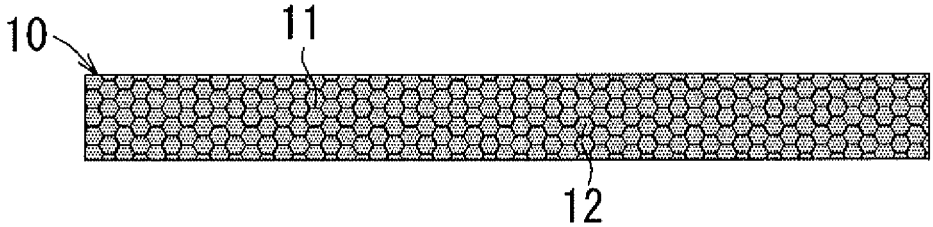

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010155233 A
- JP 1149360 A
- JP 2003132910 A
- US 2013101918 A1
- WO 2012122485 A2
- JP 51060773 A
- JP 2012515850 A


### Non-patent literature cited in the description


- **SHENG SHUI ZHANG.** A review on the separators of liquid electrolyte Li-ion batteries. *JOURNAL OF POWER SOURCES,* 01 January 2007, vol. 164 (1), 351-364